# EUROPÄISCHE PATENTSCHRIFT

(11) **EP 1 672 038 B1**
(45) Veröffentlichungstag und Bekanntmachung des Hinweises auf die Patenterteilung: **12.04.2017**
(21) Anmeldenummer: 05026194.0
(22) Anmeldetag: 01.12.2005
(51) Int. Cl.: C09C 1/24, C01G 49/08

(54) **Farbstarke, reduktions- und oxidationsstabile Eisenoxidschwarzpigmente zur Einfärbung von Kunst- und Baustoffen**
Black iron oxide pigments with high tinting strength, resistivity towards reduction and oxidation for colouring polymers and building materials
Pigments d'oxyde de fer noir de haut pouvoir colorant, résistants à la réduction et à l'oxydation, pour la coloration de matériaux plastiques et de matériaux de construction

(30) Priorität: 14.12.2004 DE 102004060044
(43) Veröffentlichungstag der Anmeldung: 21.06.2006
(73) Patentinhaber: LANXESS Deutschland GmbH, 50569 Köln (DE)
(72) Erfinder: Kunstmann, Herbert, Dr., 47802 Krefeld (DE); Kräuter, Udo, Dr., 51375 Leverkusen (DE); Rosenhahn, Carsten, Dr., 47799 Krefeld (DE); Moringen, Hans-Josef, Dipl.-Ing., 47803 Krefeld (DE)

(56) Entgegenhaltungen:
- US-A- 5 002 609
- US-A- 5 718 755
- US-A- 5 837 051

## Beschreibung

Die vorliegende Erfindung betrifft farbstarke, reduktions- und oxidationsstabile Eisenoxidschwarzpigmente, sowie deren Verwendung.

Eisenoxidschwarzpigmente bestehen aus Oxiden des zwei- und dreiwertigen Eisens mit Magnetitstruktur. Ihre Herstellung erfolgt entweder nach dem Ein- oder Zweistufen-Fällungsverfahren aus Eisen (II)-Salzlösungen, wie zum Beispiel in DE 2 618058 A1, Beispiel 1, beschrieben, oder nach dem Lauxverfahren durch Reduktion von Nitrobenzol mit metallischem Eisen (Ullmanns Encyklopädie der technischen Chemie, 4. Aufl., Band 18, Seite 603, Verlag Chemie, Weinheim 1979 und DE 518 929 C1). Auch die in DE 3 518 093 A1 beschriebene, wässrige Behandlung von im Wesentlichen aus Eisen und Sauerstoff bestehenden Pasten aus den Abwässern der Bereiche Waschung, Filtration, fest/flüssig-Trennung sowie auch Fehlchargen usw. (im folgenden als Abwasserpasten bezeichnet) führt zu Eisenoxidschwarzpigmenten. Die so erhaltenen Schwarzpigmente weisen im Allgemeinen einen unerwünschten braunstichigen Farbton auf.

Die Stabilisierung von pulverförmigem Eisenoxidschwarz gegen Oxidation kann durch eine chemische Nachbehandlung, wie sie in DE 2 625 106 A1 beschrieben ist, erfolgen. Diese stabilisiert das Pigment, jedoch wurden die Farbeigenschaften eher verschlechtert und die Ökologie des Pigmentes nicht positiv beeinflußt. Daher wurde ein Verfahren, wie in DE 3 620 333 A1 beschrieben, zur thermischen Behandlung von Schwarzpigmenten im Drehrohrofen unter inerten Bedingungen entwickelt. Eine weitere Verbesserung dieses Verfahrens, wobei die Temperung nicht inert, sondern unter leicht oxidierenden Bedingungen durchgeführt wird, ist in DE 3 910 783 A1 beschrieben.

In der DE 3 620 333 A1 werden Eisenoxidschwarzpigmente beschrieben, die nach dem Nitrobenzolreduktionsverfahren hergestellt werden und einer Temperaturbehandlung bei 200 bis 800°C unter einer nicht oxidierenden Atmosphäre ausgesetzt werden. Hierdurch können Eisenoxidschwarzpigmente mit hoher Farbstärke erhalten werden. Auch verbessert sich in gewünschter Weise die Farbqualität durch Verminderung des Brauntons bei Zunahme des Blaustichs. Der blaustichige Farbton, gekennzeichnet durch einen negativen kleinen b*-Wert, ist für Anwender besonders interessant, da er den gewünschten tiefschwarzen Farbeindruck hervorruft. Schwarzpigmente mit einem positiven großen b*-Wert wirken vor allem in der Purtonanwendung unerwünscht braunstichig. Die Methode zur Messung des b*-Wertes ist in den Beispielen angegeben. In der Praxis hat sich jedoch gezeigt, dass nach diesem Verfahren Eisenoxidschwarzpigmente erhalten werden, die in der Oxidationsstabilität nicht voll befriedigen. Das heißt, die Lagerung größerer Pigmentmengen bei Temperaturen oberhalb von 80°C muss vermieden werden, da es durch Hitzestau zu einer oxidativen Veränderung des Pigmentes kommen kann.

Die nach dem Ein- oder Zweistufen-Fällungsverfahren aus Eisen (II)-Salzlösungen gewonnenen Pigmente (siehe zum Beispiel die in DE 2 618058 A1, Beispiel 1, beschriebenen Pigmente), zeigen zwar die geforderte Reduktionsstabilität bei der Einfärbung von Kunststoffen, sind aber für einen sicheren Transport und bezüglich der Handhabung nicht befriedigend oxidationsstabil. In der EP 096 885 A1 wurde daher vorgeschlagen, dass nach dem Nitrobenzolreduktionsverfahren erhaltene Eisenoxidschwarzpigmente bei Temperaturen von 400 bis 800°C, vorzugsweise 600 bis 700°C, in schwach oxidierender Atmosphäre getempert und gegebenenfalls gemahlen werden. Die oxidierende Atmosphäre lässt sich am vorteilhaftesten mit Luftsauerstoff in Höhe von 0,1 bis 3 Vol.-%, vorzugsweise 0,3 bis 1,0 Vol.%, Sauerstoff einstellen.

Aus den oben beschriebenen Verfahren können Eisenoxidschwarzpigmente mit den gewünschten Farbeigenschaften und guter Oxidationsstabilität erhalten werden.

In US5837051 werden Eisenoxidschwarzpigmente mit exemplarischen b*-Werte von nicht kleiner als -3.3 beschrieben. Auch die in US5002609 beschriebenen Eisenoxidschwarzpigmente weisen sehr hohe exemplarische b*-Werte von -0.3 bis -0.9 auf. Ebenfalls sehr hohe b*-Werte gemäß dem CIELAB Farbsystem sind für die Eisenoxidschwarzpigmente in US5718755 beschrieben.

Bei der Einfärbung von thermoplastischen Kunststoffen zeigen herkömmliche Eisenoxidschwarzpigmente eine unerwünschte Farbverschiebung. Diese Farbverschiebung, die durch den Wert ΔE* gekennzeichnet wird, wird durch die reduzierende Umgebung in der Kunststoffschmelze hervorgerufen; die Eisenoxidschwarzpigmente sind nicht ausreichend reduktionsstabil. Die Methode zur Messung des ΔE*-Wertes ist in den Beispielen angegeben.

Aufgabe der vorliegenden Erfindung war es daher, Eisenoxidschwarzpigmente mit der geforderten guten Reduktionsstabilität bereitzustellen, die gleichzeitig für Transport und Handhabung die notwendige Oxidationsstabilität sowie die erwünschte hohe Farbstärke und einen möglichst blaustichigen Farbton aufweisen.

Diese Aufgabe wurde gelöst in Form eines Eisenoxidschwarzpigments,
- das bei der Einarbeitung in HDPE eine Farbverschiebung ΔE* nach DIN 53772 und DIN 6174 bei 260°C von < 0,7, bevorzugt von < 0,5, und
- das bei 140 °C Oxidationsstabilität nach der IMCO-Prüfung, und
- ein Verschnittverhältnis für den Farbtiefenkennwert B 1/9 nach DIN 53235 Teil 1 und 2 von > 1,9 und
- einen b*-Wert, gemessen in Aufhellung in L64 von < - 3,9, bevorzugt von < - 4,3
aufweist.

Die Methode zur Messung des Farbverschiebung ΔE* bei der Einarbeitung in HDPE, die Oxidationsstabilität nach der IMCO-Prüfung sowie das Verschnittverhältnis für den Farbtiefenkennwert B 1/9 sind in den Beispielen angegeben.

Das Eisenoxidschwarzpigment weist üblicherweise bei der Einarbeitung in HDPE eine Farbverschiebung ΔE* nach DIN 53772 und DIN 6174 bei 300°C von < 1,5, bevorzugt von < 1,2 aus.

Die Methode zur Messung des b*-Wertes ist in den Beispielen angegeben.

Das Eisenoxidschwarzpigment weist üblicherweise eine spezifische Oberfläche (BET) von 5 bis 20 m²/g, bevorzugt von 7 bis 15 m²/g auf. Die Methode zur Messung der spezifischen Oberfläche (BET) ist in den Beispielen angegeben.

Das Eisenoxidschwarzpigment weist üblicherweise eine Schüttdichte von 0,4 bis 2,4 g/cm³, bevorzugt von 0,6 bis 1,4 g/cm³ auf. Die Methode zur Messung der Schüttdichte ist in den Beispielen angegeben.

Das Eisenoxidschwarzpigment weist üblicherweise eine Stampfdichte von 0,5 bis 3,0 g/cm³, bevorzugt von 0,8 bis 1,6 g/cm³ auf. Die Methode zur Messung der Stampfdichte ist in den Beispielen angegeben.

Das Eisenoxidschwarzpigment weist üblicherweise eine mittleren Teilchengröße auf Basis einer Volumenverteilung von 1,0 bis 4 µm, besonders von 2 bis 3 µm auf. Die Methode zur Messung der mittleren Teilchengröße auf Basis einer Volumenverteilung ist in den Beispielen angegeben.

Das Eisenoxidschwarzpigment weist üblicherweise einer mittleren Teilchengröße auf Basis einer Oberflächenverteilung von 0,5 bis 5,0 µm, besonders von 1,0 bis 2,0 auf. Die Methode zur Messung der mittleren Teilchengröße auf Basis einer Oberflächenverteilung ist in den Beispielen angegeben. Das Eisenoxidschwarzpigment weist üblicherweise ein Fe(III)/Fe(II)-Verhältnis von 2,0 bis 3,6, bevorzugt von 2,4 bis 3,0 auf. Die Methode zur Messung der Fe(III)/Fe(II)-Verhältnis ist in den Beispielen angegeben.

Das Eisenoxidschwarzpigment weist üblicherweise eine Ölzahl von 10 bis 30 g Öl/100g Eisenoxidschwarzpigment auf. Die Methode zur Messung der Ölzahl ist in den Beispielen angegeben.

Das Eisenoxidschwarzpigment weist gemessen in Aufhellung in L64 vorzugsweise eine mindestens 15% höhere Farbstärke auf als Bayferrox® 318. Die Eisenoxidschwarzpigmente weisen ein Verschnittverhältnis für den Farbtiefenkennwert B 1/9 nach DIN 53235 Teil 1 und 2 von > 1,9 auf.

Die Herstellung von dem verbindungsgemäßen Eisenoxidschwarzpigment, ist beispielsweise dadurch gekennzeichnet, dass ein Eisenoxidschwarzpigment-Vorprodukt hergestellt, agglomeriert und anschließend in einem beheizten System thermisch behandelt wird.

Das Eisenoxidschwarzpigment-Vorprodukt wird vorzugsweise durch:
a) die Umsetzung von Eisensalzlösungen mit alkalischen Verbindungen und Oxidation (Fällverfahren);
b) Oxidation von metallischem Eisen mit sauerstoffhaltigen Verbindungen (Pennimanverfahren),
c) Oxidation mit Nitrobenzol (Nitrobenzolreduktionsverfahren), oder
d) Abtrennung und Aufarbeitung von im Wesentlichen aus Eisen/Eisenverbindungen und Sauerstoff bestehenden Nebenprodukten oder Abfällen (Abwasserpaste)
hergestellt.

Beispiele von Eisenoxidschwarzpigment-Vorprodukt sind alle Eisenoxid- oder hydroxidmodifikationen wie beispielsweise Goethtit, Haematit, Magnetit, Lepidokrokit sowie nicht näher charakterisierbare Eisenhydroxidphasen - zum Beispiel aus der Abwasseraufbereitung - verschiedener Oxidationsstufen sowie deren Mischungen.

Das Eisenoxidschwarzpigment-Vorprodukt wird vorzugsweise auf eine mittlere Teilchengröße von 0,05 bis 10 mm agglomeriert.

Die Agglomeration wird vorzugsweise unter Einsatz von Bindemitteln wie Wasser-, P-, Si- oder Ligninsulfonat-haltigen Bindemitteln oder einer Kombinationen dieser Bindemittel durchgeführt.

Die thermische Behandlung wird vorzugsweise bei Temperaturen von 300 bis 1.000°C, insbesondere von 600 bis 850°C durchgeführt.

Die durchschnittliche Verweilzeit des Pigments im beheizten System beträgt vorzugsweise von 3 Min bis 60 Min, insbesondere von 4 Min bis 40 Min.

Die thermische Behandlung wird in Abhängigkeit der chemischen Zusammensetzung und der physikalischen Eigenschaften des Eisenoxidschwarzpigment-Vorproduktes vorzugsweise in leicht reduzierender, inerter oder leicht oxidierender Atmosphäre durchgeführt. Bevorzugt wird die thermische Behandlung unter leicht oxidierenden Bedingungen durchgeführt. Leicht oxidierende Bedingungen im Sinne der Erfindung bedeuten einen Sauerstoffgehalt von 0,5 - 3,5 %, bevorzugt 1,5 - 2,5 % bei einem Kohlenmonoxidgehalt von 0,0 - 0,5 %, bevorzugt 0,1 -0,3 % bezogen auf trockenes Prozessgas.

Die Oxidation wird vorzugsweise mit sauerstoffhaltigen Gasen als Oxidationsmittel durchgeführt.

Das beheizte System enthält vorzugsweise einen ersten Apparat, indem das Vorprodukt durch ein von unten nach oben gerichtetes Gasgemisch aufgewirbelt wird, so dass eine Strömung eines Gas-Feststoff-Gemischs gebildet wird, die von unten nach oben durch den ersten Apparat strömt und dass danach, gegebenenfalls in einem zweiten nachgeschalteten Apparat, die Gas- und Feststoffkomponenten voneinander getrennt werden. Durch eine kontinuierliche Überwachung des Prozessgases wird sichergestellt, dass die Anlage abgeschaltet wird, bevor ein explosionsfähiges Gasgemisch entstehen kann.

Die Sauerstoffmenge im Abgas des beheizten Systems beträgt vorzugsweise zwischen 0,0001 und 0,026 Mol Sauerstoff pro Mol durchgesetztem Eisen.

Ein Teil des Gas-Feststoff-Gemisches wird vorzugsweise als Eisenoxidschwarzpigment-Produkt am Boden des ersten Apparates entnommen. Das Gas-Feststoff-Verhältnis im ersten Apparat beträgt vorzugsweise 100 bis 1.300 Nm³/t Eisenoxidschwarzpigment.

Die Leerrohrgasgeschwindigkeit im ersten Apparat beträgt vorzugsweise zwischen 0,5 und 6 m/s.

Der erste Apparat ist vorzugsweise ein zirkulierender Wirbelschichtreaktor.

Der nachgeschaltete Apparat ist vorzugsweise ein Zyklon. Ein Zyklon im Sinne der Erfindung ist ein Gerät zur Abscheidung von Staub oder Flüssigkeitströpfchen mit Hilfe der Flieh- und Schwerkraft (Fliehkraftabscheider). Zyklone bestehen im Prinzip aus einem zylindrischen Gefäß mit konisch zulaufendem Boden, in das oben das Staubluft-Eintrittsrohr tangential und das Reinluft-Austrittsrohr vertikal hineinragen. Der tangential eintretende Gas/Staub-Strom induziert eine Wirbelströmung, wobei die gröberen Staubteilchen durch die Zentrifugalkraft an die Wand des Zylinders geschleudert werden und von dort durch die Schwerkraft zu Boden sinken, von wo sie ausgetragen werden können. Der kreisende, vom Staub befreite Gaswirbel kehrt am Boden des Zyklons seine Richtung um und verlässt den Zyklon nach oben durch das Austrittsrohr zusammen mit eventuell feineren Partikeln, denn das Trennprinzip reicht nicht aus, um Feinstaub-Verunreinigungen mit Partikelgrößen <5 µm zu beseitigen (Römpp Lexikon Chemie - Version 2.0, Stuttgart/New York: Georg Thieme Verlag 1999).

Es ist vorteilhaft, die Reaktion mit einem guten Gas-Feststoff-Kontakt durchzuführen. Dies kann in einem Wirbelschichtreaktor, einer zirkulierenden Wirbelschicht, einem Drehrohrofen, einem Drehrohrofen mit Hubschaufeln, einem Festbettreaktor oder in weiteren dem Fachmann bekannten Aggregaten erfolgen. Die verwendeten Aggregate können direkt oder indirekt mit geeignetem Brennstoff oder elektrisch beheizt werden.

Durch geeignete Variation der Reaktionsbedingungen, insbesondere Sauerstoff- und, Kohlenmonoxidgehalt, Reaktionstemperatur und Verweilzeit können die in den Ansprüchen beschriebenen Eigenschaften gezielt eingestellt werden. So erniedrigt sich durch einen höheren CO-Gehalt in der Gasatmosphäre das Fe(III) / Fe(II)-Verhältnis, und es entstehen blaustichigere Eisenoxid-Schwarzpigmente. Die BET-Oberfläche kann durch Erhöhung der Reaktionstemperatur erniedrigt werden. Entsprechend erfolgt eine Erhöhung der mittleren Teilchengröße.

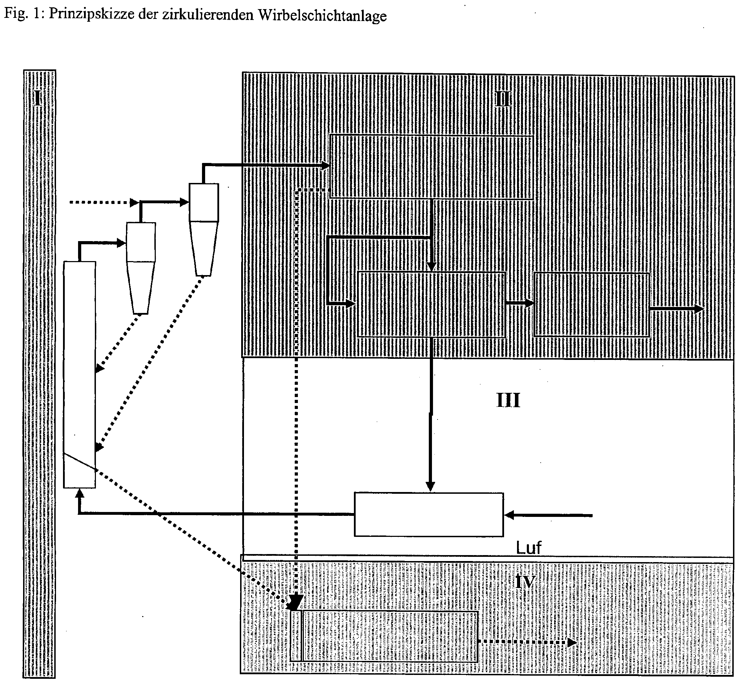

In einer bevorzugten Ausführungsform wird die Herstellung gemäß Fig. 1 ausgeführt. Dabei besteht die zirkulierende Wirbelschichtanlage aus
- eine Kernanlage (I) enthaltend einen Reaktor (A), einen Vorabscheidezyklon (B1), eine Vorwärmestufe (B2) wo das Edukt (1) zugegeben wird und einen Rückführzyklon (B3),
- eine Abgasreinigung (II) enthaltend einen Staubabscheider (C), einen Abgasverbrenner (D), ein Abgaswäscher (F) und einen Kamin (G),
- eine Prozessgaserzeuger (III) enthaltend ein Gasbrenner (H) worin beispielsweise Erdgas (2) verbrannt wird,
- und einen Austrag (IV) enthaltend einen Produktkühler (I) wo das Produkt (3) ausgetragen wird.

Die Anlage wird hiernach näher beschrieben.

Durch den Gasverteiler gelangt Reaktionsgas, erhalten durch die Verbrennung von beispielsweise Erdgas (2) bei einer Temperatur von 880°C in den Reaktor (A), beispielsweise ein Steigrohr, mit einem Durchmesser von 1,80 m und einer Höhe von 18 m. Im Kopf des Reaktors (A) stellt sich dabei eine Temperatur von 636°C ein. Das im Reaktor (A) befindliche Eisenoxidmikrogranulat wird durch das Prozessgas mit einer Leerrohrgeschwindigkeit von 2,5 m/s beschleunigt und gelangt in den Vorabscheidezyklon (B1). Der Feststoff wird im Vorabscheidezyklon (B1) vom Heißgas abgetrennt und gelangt durch Klappen zurück in den Reaktor (A). Das Heißgas geht vom Vorabscheidezyklon (B1) in die Vorwärmstufe (B2), wo das zu tempernde Pigment mit 3,5 t/h zugegeben wird. Der Feststoff wird durch das Heißgas aufgeheizt, er gelangt dann in den Rückführzyklon (B3). Im Rückführzyklon (B3) wird der Feststoff vom Abgas getrennt. Der Feststoff gelangt vom Rückführzyklon (B3) zurück in den Reaktor (A). Aus dem Reaktor (A) wird kontinuierlich Feststoff ausgetragen, in einem Produktkühler (I) wie beispielsweise einem Drehrohrkühler auf Umgebungstemperatur abgekühlt und anschließend ausgetragen (3) und in einem Silo zwischengelagert.

Das Prozessgas wird vorzugsweise durch die Verbrennung von Erdgas mit Luft erzeugt, wobei ein Teil des Abgases aus dem Rückführzyklon (B3) nach Entstaubung im Staubabscheider (C) und Vorwärmung durch Wärmetauscher in der Abgasverbrennung (D) wieder dem Gasbrenner (H) zugeführt wird. Das Abgas selbst wird im Abgaswäscher (F) gewaschen und durch einen Kamin (G) ausgeführt. Durch Einstellung eines unterstöchiometrischen Gas-Luftverhältnisses am Gasbrenner wird ein Kohlenmonoxidgehalt von 0,30 Vol.% im Prozessgas eingestellt. Durch eine Luftlanze im Steigrohr wird der für die leicht oxidierende Temperung notwendige Sauerstoffgehalt von 1,3 Vol.% eingestellt.

Bevorzugt wird die thermische Behandlung in einer Gasatmosphäre mit folgender Zusammensetzung durchgeführt:
- Wasserdampfgehalt 30 bis 50 Vol.-%,
- Kohlendioxidgehalt 2 bis 10 Vol.-%,
- Sauerstoffgehalt 0 bis 4 Vol.-%,
- Kohlenmonoxidgehalt 0,05 bis 1 Vol.-%.
- Der verbleibende Anteil besteht zum größten Teil aus Stickstoff. Gegebenenfalls können noch Anteile von SO₂ und NOₓ enthalten sein.

Die Umsetzung findet bevorzugt bei einer Temperatur zwischen 300 und 1000°C statt bei einer Verweilzeit von mindestens 4 Minuten.

Nach der thermischen Behandlung kann das Eisenoxid-Schwarzpigment für die spätere Verwendung einer Mahlung, Mikronisierung, Kompaktierung, Granulierung oder weitere dem Fachmann bekannten Konfektionierungsschritten unterworfen werden.

Je nach Einsatzzweck kann die Pigmentoberfläche durch eine organische oder anorganische Nachbehandlung modifiziert werden.

Die Erfindung betrifft auch die Verwendung der Eisenoxidpigmente zur Einfärbung von anorganischen oder organischen Dispersionen, Kunststoffen oder Baustoffen. Durch die Behandlung wird der Einsatz beispielsweise in Lebensmittelfarben, Katalysatoren, Abwasserbehandlung, Toner und sonstige dem Fachmann bekannte Anwendungen für Eisenoxid-Schwarzpigmente in keiner Weise eingeschränkt.

Die Eisenoxidschwarzpigmentes sind beispielsweise geeignet zur Einfärbung von anorganischen oder organischen Dispersionen sowie zur Einfärbung von Erzeugnissen der Farben und Lack-, Beschichtungs-, Baustoff-, Kunststoff-, Papierindustrie, in Lebensmittel und in Produkte der Pharmaindustrie wie beispielsweise in Tabletten.

Anhand der nachfolgenden Beispiele wird die Erfindung näher erläutert, ohne dass dadurch eine Einschränkung der Erfindung bewirkt werden soll.

### Beispiele

### I. Beschreibung der verwendeten Messmethoden

### I.1. Messung der Farbwerte in L64thix, Aufhellung

Das Pigment wurde mit dem Muller in einem nichttrocknenden Prüfbindemittel präpariert. Das Prüfbindemittel ("L64 Paste") besteht aus zwei Komponenten:

### Komponente 1

SACOLYD^{®} L640 (Krems Chemie AG, AU, Alkydharz-Bindemittel auf Basis Leinöl und Phthalsäureanhydrid) (vormals ALKYDAL^{®} L64 (Bayer AG, DE)). Es entspricht den Spezifikationen, die in den Normen DIN EN ISO 787-24 (Oktober 1995), ISO 787- 25:1993 und DIN 55983 (Dezember 1983) als Anforderungen an ein Prüfbindemittel für Farbpigmente genannt werden.

### Komponente 2

LUVOTHIX^{®} HT (Lehmann & Voss & Co., DE, pulverförmiges, modifiziertes, hydriertes Rizinusöl) als rheologisches Additiv, welches zum Thixotropieren der Paste zugesetzt wird. Es wurde in einer Konzentration von 5,0 Gew.-%, bezogen auf Komponente 1 eingesetzt.

Die Komponente 2 wurde in der Komponente 1 bei 75 - 95 °C gelöst. Die abgekühlte, stichfeste Masse wurde einmal über ein Dreiwalzwerk gegeben. Damit wurde die L64 Paste fertiggestellt. Verwendet wurde eine Teller-Farbenausreibmaschine (Muller), wie in DIN EN ISO 8780-5 (April 1995) beschrieben. Zur Anwendung kam ein ENGELSMANN JEL 25/53 Muller mit einem wirksamen Tellerdurchmesser von 24 cm. Die Drehzahl des unteren Tellers betrug ca. 75 min-1. Durch Einhängen eines 2,5 kg Belastungsgewichtes auf den Belastungsbügel wurde die Kraft zwischen den Tellern auf ca. 0,5 kN eingestellt.

Als Aufhellmittel wurde ein handelsübliches Titandioxidpigment, TRONOX^{®} R-KB-2, (Kerr-McGee Corp., US) (vorm. BAYERTITAN^{®} R-KB-2 (Bayer AG, DE)), verwendet. R-KB-2 entspricht in seiner Zusammensetzung dem Typ R 2 in ISO 591 - 1977. Es wurde 0,4g zu prüfendes Pigment, 2,0 g TRONOX ^{®} R-KB-2 und 3,0 g L64 Paste in fünf Stufen zu je 25 Umdrehungen nach dem in DIN EN ISO 8780-5 (April 1995) Abschnitt 8.1 beschriebenen Verfahren dispergiert. Anschließend wurde die Pigment-Pasten-Mischung in einen Pastenteller eingestrichen, der in seiner Funktion dem Pastenteller in DIN 55983 (Dezember 1983) entspricht. Die zum Pastenteller gehörige Rakel wird über die mit der Pigment-Pasten-Mischung gefüllte Vertiefung des Tellers gezogen, so dass ein glatte Oberfläche entsteht. Die Rakel wird dabei in einer Richtung mit einer Geschwindigkeit von ca. 3 - 7 cm/s bewegt. Die glatte Oberfläche wird innerhalb weniger Minuten gemessen.

### Farbmessgerät

Es wurde ein Spektrophotometer ("Farbmessgerät") mit der Messgeometrie d/8 ohne Glanzfalle verwendet. Diese Messgeometrie ist in ISO 7724/2-1984 (E), Punkt 4.1.1, in DIN 5033 Teil 7 (Juli 1983), Punkt 3.2.4 und in DIN 53236 (Januar 1983), Punkt 7.1.1 beschrieben.

Zur Anwendung kam ein DATAFLASH^{®} 2000-Meßgerät (Datacolor International Corp., USA). Das Farbmessgerät wurde gegen einen weißen, keramischen Arbeitsstandard kalibriert, wie in ISO 7724/2-1984 (E) Punkt 8.3 beschrieben. Die Reflexionsdaten des Arbeitsstandards gegen einen ideal mattweißen Körper sind im Farbmessgerät hinterlegt, so dass nach Kalibrierung mit dem weißen Arbeitsstandard alle Farbmessungen auf den ideal mattweißen Körper bezogen werden. Die Schwarzpunktkalibrierung wurde mit einem schwarzen Hohlkörper des Farbmessgeräteherstellers ausgeführt.

### Farbmessung

Das Ergebnis der Farbmessung ist ein Reflexionsspektrum. Für die Berechnung von farbmetrischen Größen spielt es keine Rolle, bei welcher Lichtart die Messung erfolgte (außer bei fluoreszierenden Proben). Aus dem Reflexionsspektrum kann jede beliebige farbmetrische Größe berechnet werden. Die in diesem Fall verwendeten farbmetrischen Größen werden gemäß der DIN 6174 (CIELAB-Werte) berechnet. Unter anderem, wird gemäß der DIN 6174 der Farbwert "b*" ausgerechnet. Für den Farbeindruck gilt: je negativer b* ist, desto blaustichiger ist das Farbpigment.

Eine eventuell vorhandene Glanzfalle ist ausgeschaltet. Die Temperatur von Farbmessgerät und Prüfling betrug ca. 25 °C ± 5 °C.

### I.2. Farbstärke

Die Farbwerte werden gemäß der oben beschriebenen Messung nach DIN 6174 (CIELAB-Werte) angegeben. Aus der Messung in der Aufhellung resultiert auch die relative Farbstärke des gemessenen Farbpigmentes gegen ein Vergleichspigment (im gegebenen Fall: Bayferrox® 318, siehe Tabelle 1). Um aus diesen relativen Angaben einen absoluten Kennwert anzugeben, wurde das sogenannte "Verschnittverhältnis" berechnet. Das Verschnittverhältnis wurde gemäß der DIN-Norm 53235 Teil 1 und Teil 2 aus dem Jahr 1974 für den Farbtiefenkennwert B 1/9 bestimmt. Anschaulich wird mit dem Verschnittverhältnis das Verhältnis einer farbgebenden Substanz zu einer Mischkomponente (im gegebenen Fall: TiO₂) angegeben, mit der eine definierte Farbtiefe (Einfärbungstiefe) gemäß der DIN-Norm 53235 Teil 1 und 2 aus dem Jahr 1974 erreicht wird. Ein hohes Verschnittverhältnis bedeutet, dass mit weniger Pigment die gleiche Einfärbungstiefe erreicht werden kann. Ein solches Pigment ist deshalb in der praktischen Anwendung farbstärker. Ein Verschnittverhältnis für den Farbtiefenkennwert B 1/9 nach DIN 53235 Teil 1 und 2 von größer als 1,9 entspricht einer mindestens 15% höheren Farbstärke als Bayferrox® 318.

### I.3. Farbverschiebung / Reduktionsstabilität

Die Messung der Farbverschiebung in eine reduzierende Umgebung ("Reduktionsstabilität") erfolgt in HDPE nach DIN 53772 von September 1981 durch 1 %ige Pigmentierung in HDPE, wobei die Farbabweichung der Probekörper bei Erhöhung der Einarbeitungstemperatur im Vergleich zur tiefstmöglichen Prüftemperatur von 200°C bestimmt wird. ΔE* wird von den Proben, die bei 300°C, 260°C und 200°C (200°C = tiefstmögliche Prüftemperatur = Bezug) Einarbeitungstemperatur in HDPE hergestellt wurden, nach DIN 6174 von Januar 1979 bestimmt.

"HDPE" ist eine Kurzbezeichnung (nach DIN 7728, Tl. 1, 01/1988 der englischen Bezeichnung. "high density polyethylene" abgeleitet) für unter niedrigem Druck hergestelltes Polyethylen hoher Dichte. Anstelle der Kurzbezeichnung HDPE wird heute zunehmend die Abkürzung PE-HD verwendet. Neben dem konventionellen HDPE mit Molmassen von unter 300 000 g/mol sind für Spezialzwecke höhermolekulare Polyethylene hoher Dichte auf dem Markt, die als "high molecular weight" HMW-HDPE (4 · 10⁴<M_{R}<3 · 10⁵), "extra high molecular weight" (5 · 10⁵<M_{R}<1,5 · 10⁶) u. "ultra-high molecular weight" UHMW-PE (M_{R}>3,1 · 10⁶) bezeichnet werden (Römpp Lexikon Chemie - Version 2.0, Stuttgart/New York: Georg Thieme Verlag 1999).

Reduktionsstabilität im Sinne der Anmeldung bedeutet, dass die Farbverschiebung ΔE* der HDPE Probekörper bei Erhöhung der Einarbeitungstemperatur von 200°C auf 300°C maximal 0,7 Einheiten beträgt.

### 1.4. Oxidationsstabilität

Oxidationsstabilität im Sinne der Anmeldung bedeutet, dass das Produkt in der IMCO-Prüfung eine Temperaturbeständigkeit von mindestens 140°C aufweisen muss. Die Intergovernmental Maritime Consultative Organization, auch IMCO genannt und ab 1982 in International Maritime Organization ("IMO") umbenannt, ist eine Internationale Meeresorganisation, die 1948 mit dem Ziel eingerichtet wurde, der Erleichterung der technischen Zusammenarbeit in Schiffsangelegenheiten zwischen Regierungen, hauptsächlich zur Gewährleistung sicherer und effizienter Navigation sowie Kontrolle der Meeresverschmutzung durch Schiffe.

Zur Prüfung der Oxidationsstabilität gemäß der sogenannten IMCO-Prüfung wird 1 1 Produkt in einen luftdurchlässigen Drahtnetzkubus aus Phosphorbronze Gaze 18,000 mesh pro cm² (350 X 350 Mesh) mit 10 cm Seitenlänge gefüllt; der Kubus in die Mitte eines Labor-Ofens mit innerer Luftzirkulation gestellt, auf Prüftemperatur von 140 °C geheizt und 24 h bei dieser Temperatur gehalten. Tritt im Inneren der Probe eine Temperatur über 200°C auf, ist die Probe nach der IMCO-Prüfung nicht stabil.

Dabei wird ein Labor-Ofen versehen mit einer inneren Luft-Zirkulation und der Kontrollmöglichkeit zur Erreichung von Innenraumtemperaturen von 140 °C +/- 2 °C verwendet. Zur Temperaturmessung wird ein geeignetes System zum Messen und Eintragen der Temperatur im Ofen und im Mittelpunkt des Kubus verwendet. Verwendet wurde ein Chrom-Aluminium Thermopaar aus 0,27 mm Durchmesser Draht.

### 1.5. BET-Oberfläche

Die Bestimmung der BET-Oberfläche erfolgt über das Trägergasverfahren (He:N₂=90:10) nach der Einpunkt-Methode, gemäß DIN 66131 (1993). Vor der Messung wird die Probe 1 h bei 140 °C im trockenen Stickstoffstrom ausgeheizt. Die Messtemperatur beträgt 77 K.

### 1.6. Schüttdichte

Die Schüttdichte wird am Fertiggut ohne weitere Behandlung des Produktes durch das Verhältnis aus Masse und Volumen bestimmt.

### 1.7. Stampfdichte

Die Stampfdichte wird durch ISO 787 Teil 11 (1995) bestimmt.

### 1.8. Mittlere Teilchengrößenverteilung

Sowohl die mittlere Teilchengröße auf Basis einer Volumenverteilung (D [4,3]) als auch die mittlere Teilchengröße auf Basis einer Oberflächenverteilung (D [3,2]) wird durch Laserbeugung (Gerät der Firma Malvern Instruments "Mastersizer-S") in einer wässrigen Suspension mit 0,1% Natriumphosphat als Dispergierhilfsmittel nach einer zweiminütigen Ultraschalldispergierung mit 200 W bestimmt.

"D [4,3]" ist der Mittelwert der Teilchengröße bezogen auf die Volumenverteilung ("Herdan-Durchmesser").

"D[3,2]" ist der Mittelwert der Teilchengröße bezogen auf die Oberflächenverteilung ("Sauter-Durchmesser").

### 1.9. Fe(III)/Fe(II)-Verhältnis

Die Fe(III)/Fe(II)-Verhältnis wird durch potentiometrische Titration nach saurem Aufschluss der Proben bestimmt.

### 1.10. Ölzahl

Unter "Ölzahl" wird die Menge Lackleinöl, die unter festgelegten Bedingungen von einer Pigment- oder Füllstoffprobe absorbiert wird, verstanden. Die Ölzahl ist eine übliche Kennzahl zur Charakterisierung des Ölbedarfs von Pigmenten und Füllstoffen und ist als Einheit mg/100g oder g/100g angegeben. Der Ölzahl wird gemäß ISO 787 Teil 5 (1983) bestimmt.

### II. Beispiel 1

25 m³ einer im wesentlichen aus Eisen und Sauerstoff bestehenden Paste aus den Abwässern der Bereiche Waschung, Filtration, fest/flüssig-Trennung sowie auch Fehlchargen (im folgenden als Abwasserpasten bezeichnet) mit einer Dichte von 1,25 g/cm³ und 10 m³ einer Abwasserpaste mit einer Dichte von 1,4 g/cm³ wurden in einem Rührbehälter vorgelegt und mit 4000 1 32%er Natronlauge versetzt. Durch Einblasen von Direktdampf wurde das Reaktionsgemisch auf 90°C erwärmt. Nach Zugabe von 20 m³ Eisensulfatschlamm, der bei der Klärung von Eisensulfatlösung in anderen Betriebsbereichen anfällt, wurde 90 min gerührt, wobei der Ansatz mit 100 m³/h Luft begast wurde. Nach Zugabe weiterer 250 l Natronlauge wurde nochmals 90 min gerührt. Dabei wurde 20 t eines Eisenoxidschwarzpigmentes erhalten. Nach Verdünnen mit Wasser auf eine Dichte von 1,1 g/cm³ wurde in einer Hydrozyklonanlage Grobanteile entfernt.

Nach Eindicken durch Sedimentation und Filtration über ein Vakuumtrommelfilter wurde die Paste über einen Scheibensprühtrockner mit einer Heißgaseintrittstemperatur von 600°C auf eine Restfeuchte von 2% getrocknet.

Das so erhaltene Mikrogranulat mit einer mittleren Teilchengröße von 100 µm wurde in einer zirkulierenden Wirbelschicht getempert. Es wurden jedoch die folgenden Prozessparameter eingestellt:
- Leerrohrgeschwindigkeit: 2,5 m/s
- Temperatur des Prozessgases: 880°C
- Temperatur im Kopf des Steigrohres: 636°C
- Produktaufgabe: 3,5 t/h
- CO-Gehalt im Prozessgas: 0,30 Vol.%
- O₂-Gehalt im Prozessgas: 1,3 Vol.-%.
10 t des so hergestellten Schwarzpigmentes wurde in einem Bändennischer mit 15 l 1,2-Propylenglykol versetzt und über eine Pendelrollenmühle auf einen Siebrückstand < 0,05 % bei 45 µm Maschenweite vermahlen. Die Daten des so erhaltenen erfindungsgemäßen Schwarzpigmentes sind in den Tabellen 1 und 2 zusammengestellt.

### III. Beispiel 2

25 m³ einer im wesentlichen aus Eisen und Sauerstoff bestehenden Paste aus den Abwässern der Bereiche Waschung, Filtration, fest/flüssig-Trennung sowie auch Fehlchargen usw. (im folgenden als Abwasserpasten bezeichnet) mit einer Dichte von 1,33 g/cm³ und 30 m³ einer Abwasserpaste mit einer Dichte von 1,2 g/cm³ wurde in einem Rührbehälter vorgelegt und mit 4500 1 32%er Natronlauge versetzt. Durch Einblasen von Direktdampf wurde das Reaktionsgemisch auf 90°C erwärmt. Nach Zugabe von 20 m³ Eisensulfatschlamm, der bei der Klärung von Eisensulfatlösung in anderen Betriebsbereichen anfällt, wurde 90 min gerührt, wobei der Ansatz mit 100 m³/h Luft begast wurde. Anschließend wurde nochmals 90 min gerührt. Dabei werden 27 t eines Eisenoxidschwarzpigmentes erhalten. Nach Verdünnen mit Wasser auf eine Dichte von 1,03 g/cm³ wurde in einer Hydrozyklonanlage Grobanteile entfernt.

Nach Eindicken durch Sedimentation und Filtration über ein Vakuumtrommelfilter wurde die Paste über einen Scheibensprühtrockner mit einer Heißgaseintrittstemperatur von 475°C auf eine Restfeuchte von 2,5 % getrocknet.

Das so erhaltene Mikrogranulat mit einer mittleren Teilchengröße von 100 µm wurde in der im Beispiel 1 beschriebenen zirkulierenden Wirbelschicht getempert. Es wurden jedoch die folgenden Prozessparameter eingestellt:
- Leerrohrgeschwindigkeit: 2,2 m/s
- Temperatur des Prozessgases: 900°C
- Temperatur im Kopf des Steigrohres: 698°C
- Produktaufgabe: 3,4 t/h
- CO-Gehalt im Prozessgas: 0,12 Vol.-%
- O₂-Gehalt im Prozessgas: 1,8 Vol.-%.
10 t des so hergestellten Schwarzpigmentes werden in einem Bändermischer mit 15 l 1,2-Propylenglykol versetzt und über eine Pendelrollenmühle auf einen Siebrückstand < 0,003 % bei 45 µm Maschenweite vermahlen. Die Daten des so erhaltenen erfindungsgemäßen Schwarzpigmentes sind in den Tabellen 1 und 2 zusammengestellt.

### Vergleichbeispiele

Vergleichpigment ist im Handel erhältliches Bayferrox^{®} 318, Bayferrox^{®} 318M, undBayferrox^{®} 306 der Firma Lanxess Deutschland GmbH, sowie zwei weitere Vergleichsbeispiele. Das erste wurde nach EP 187434 Beispiel 1 hergestellt, das zweite ist ein gängiges Fällungsschwarzpigment, welches nach einem Fällverfahren hergestellt worden ist. Solche Pigmente lassen sich Beispielsweise nach DE 2 618058 A1 Beispiel 5 herstellen.

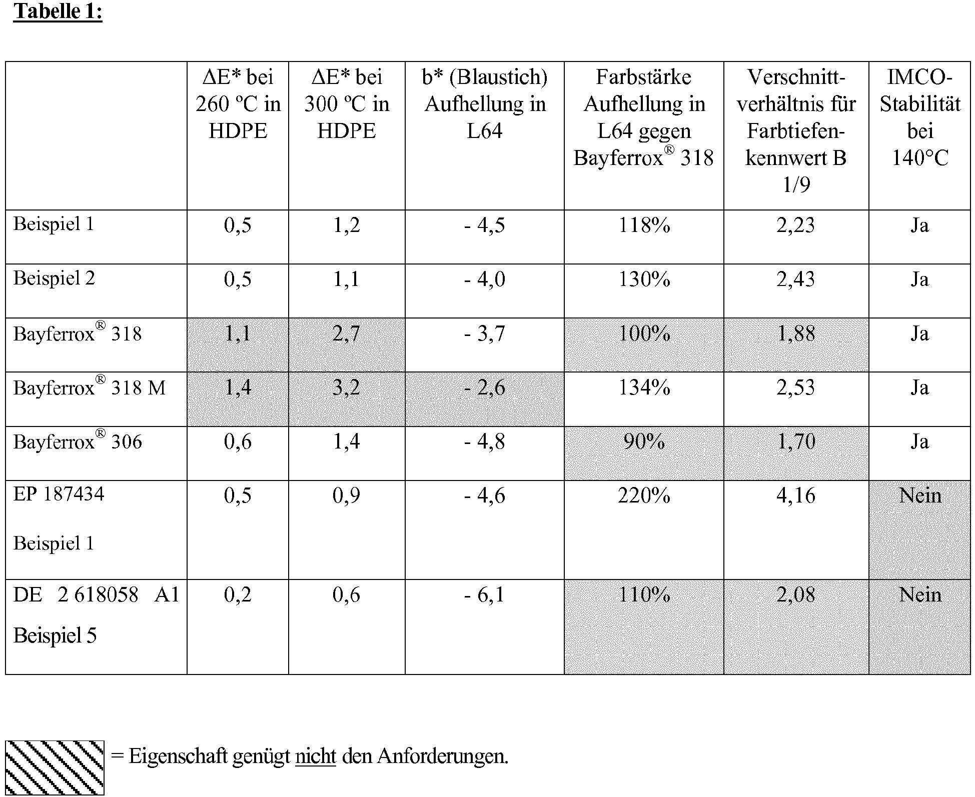

**Tabelle 2:**

| | Fe(III)/Fe(II) | BET m²/g | Stampfdichte g/cm³ | Schüttdichte g/cm³ | Ölzahl g/100g |
|---|---|---|---|---|---|
| Beispiel 1 | 2,77 | 9,7 | 1,03 | 0,70 | 19,0 |
| Beispiel 2 | 2,83 | 9,6 | 1,05 | 0,64 | 19,2 |
| Bayferrox^{®} 318 | 3,51 | 10,2 | 1,23 | 0,75 | 19 |
| Bayferrox^{®} 306 | 3,20 | 12,6 | 1,43 | 0,9 | 20 |
| Bayferrox^{®} 318 M | 3,30 | 10,7 | 1,4 | 0,9 | 18 |
| EP 187434 Beispiel 1 | 2,38 | 7,9 | 1,51 | 0,94 | 16 |
| DE 2 618058 A1 Beispiel 5 | 2,36 | 4,2 | 0,75 | 0,37 | 25,6 |

## Patentansprüche

1. Eisenoxidschwarzpigment
• das bei der Einarbeitung in HDPE eine Farbverschiebung ΔE* nach DIN 53772 und DIN 6174 bei 260°C von < 0,7, insbesondere von < 0,5 und
• das bei 140 °C Oxidationsstabilität nach der IMCO-Prüfung und
• ein Verschnittverhältnis für den Farbtiefenkennwert B 1/9 nach DIN 53235 Teil 1 und 2 von > 1,9 und
• einen b*-Wert gemäß DIN 6174, gemessen in Aufhellung in L64 von < - 3,9, insbesondere von < - 4,3
aufweist.

2. Eisenoxidschwarzpigment nach Anspruch 1, **dadurch gekennzeichnet, dass** das Eisenoxidschwarzpigment bei Einarbeitung in HDPE eine Farbverschiebung ΔE* nach DIN 53772 und DIN 6174 bei 300°C von < 1,5, insbesondere von < 1,2 aufweist.

3. Verwendung der Eisenoxidpigmente nach einem der Ansprüche 1 oder 2 zur Einfärbung von anorganischen oder organischen Dispersionen sowie zur Einfärbung von Erzeugnissen der Farben- und Lack-, Beschichtungs-, Baustoff-, Kunststoff-, Papierindustrie, in Lebensmitteln und in Produkten der Pharmaindustrie, bevorzugt in Tabletten.

## Claims

1. Iron oxide black pigment
• which has a colour shift ΔE* according to DIN 53772 and DIN 6174 at 260°C of < 0.7, in particular of < 0.5, on incorporation into HDPE, and
• which is stable to oxidation at 140°C according to the IMCO test, and
• which has an extension ratio for the colour depth characteristic B 1/9 according to DIN 53235 Parts 1 and 2 of > 1.9, and
• which has a b* value according to DIN 6174, measured in reduction in L64, of < -3.9, in particular of < -4.3.

2. Iron oxide black pigment according to Claim 1, **characterized in that** the iron oxide black pigment has a colour shift ΔE* according to DIN 53772 and DIN 6174 at 300°C of < 1.5, in particular of < 1.2, on incorporation into HDPE.

3. Use of the iron oxide pigments according to either of Claims 1 and 2 for colouring inorganic or organic dispersions and for colouring products of the paint and finish, coatings, building materials, plastics and paper industry, in foods and in products of the pharmaceutical industry, preferably in tablets.

## Revendications

1. Pigment noir d'oxyde de fer, qui présente
- lors de l'incorporation dans de l'HDPE, un décalage de couleur ΔE* selon DIN 53772 et DIN 6174 à 260 °C de < 0,7, notamment de < 0,5, et
- une stabilité à l'oxydation à 140 °C selon l'évaluation IMCO, et
- un rapport de coupe pour l'indice d'intensité de couleur B 1/9 selon DIN 53235 partie 1 et 2 de > 1,9, et
- une valeur b* selon DIN 6174, mesurée en éclaircissement dans L64 de < -3,9, notamment de < - 4,3.

2. Pigment noir d'oxyde de fer selon la revendication 1, **caractérisé en ce que** le pigment noir d'oxyde de fer présente lors de l'incorporation dans de l'HDPE un décalage de couleur ΔE* selon DIN 53772 et DIN 6174 à 300 °C de < 1,5, notamment de < 1,2.

3. Utilisation des pigments d'oxyde de fer selon l'une quelconque des revendications 1 ou 2 pour la coloration de dispersions inorganiques ou organiques, ainsi que pour la coloration d'articles de l'industrie des peintures et des vernis, des revêtements, des matériaux de construction, des plastiques, du papier, dans des produits alimentaires et dans des produits de l'industrie pharmaceutiques, de préférence dans des comprimés.
